# DEMANDE DE BREVET EUROPEEN

(11) **EP 1 915 906 A1**
(43) Date de publication de la demande: **30.04.2008**
(21) Numéro de dépôt: 06301096.1
(22) Date de dépôt: 27.10.2006
(51) Int. Cl.: A01M 1/14, A01M 1/18, A01M 23/00, A01G 13/10, C08K 3/34, C08L 7/02, C08L 9/10

(54) **Composition destinée à la lute contre les insectes et autres arthtropodes ravageurs des plantes**

(71) Demandeur: INSTITUT NATIONAL DE LA RECHERCHE AGRONOMIQUE (INRA), 75341 Paris Cédéx 07 (FR)
(72) Inventeur: Peltier, Jean-Benoît 135 Avenue de Lodeve, 34080, MONTPELLIER (FR); Tauzin, Marc, 34090, MONTPELLIER (FR)
(74) Mandataire: Catherine, Alain

(57) **Abrégé**

La présente invention a pour objet une composition comprenant :
- un polymère naturel ou synthétique, et leurs mélanges, et
- un composé épaississant choisi parmi de l'argile, de la glu, une résine, une cire, une gomme, un mucilage, de l'agar, du sorbitol, de l'alginate, un polymère naturel ou synthétique, et leurs mélanges.
La composition définie ci-dessus est destinée à la lutte contre les insectes et autres arthropodes ravageurs des plantes, en permettant de former, après application sur une plante, un revêtement formant une barrière physique durable entre la plante et l'insecte.

## Description

La présente invention concerne de manière générale la lutte contre les insectes et autres arthropodes ravageurs des plantes. Elle concerne plus particulièrement une composition destinée à limiter, bloquer ou prévenir l'infestation des plantes par les insectes ravageurs.

### Arrière plan de l'invention

Les ravageurs entraînent des pertes économiques de plusieurs milliards d'euros chaque année dans le domaine agricole. Face à ce problème, les pesticides sont d'un grand secours. Leur utilisation a été multipliée par 32 entre 1950 et 1986, les pays en développement utilisant maintenant le quart de tous les pesticides consommés dans le monde. Toutefois, un emploi incorrect et excessif de ces produits peut contaminer aussi bien les denrées alimentaires que l'environnement et, dans certains cas, nuire à la santé des agriculteurs. Les pesticides tuent également les ennemis naturels des ravageurs, permettant à ceux-ci de se multiplier.

Dans ce cadre, des solutions alternatives ont été développées, et consistent à utiliser par exemple des produits naturels, issus de plantes, de bactéries ou encore des produits minéraux comme insecticide. On peut citer à titre d'exemple l'utilisation de limonène, de linalool ou encore de nicotine. Ces produits naturels se dégradent rapidement dans l'environnement et présentent donc des risques toxiques moindres.

Néanmoins, ces produits s'avèrent parfois peu efficaces, du fait de leur mode d'action, et de leur dégradation rapide.

De plus, l'ensemble des compositions insecticides décrites ci-dessus sont adaptées au traitement d'un genre, d'une famille ou d'une espèce d'insecte parfois très spécifique, ce qui peut représenter un inconvénient lorsqu'une composition à très large spectre est recherchée. En outre, des phénomènes de résistance sont souvent rencontrés avec les compositions insecticides citées ci-dessus. Les ravageurs résistants aux pesticides qui étaient très peu nombreux il y a 50 ans sont en effet aujourd'hui au nombre d'un millier environ, ce qui représente un inconvénient supplémentaire des compositions insecticides décrites ci-dessus.

Il existe donc un besoin pour une nouvelle composition de lutte contre les insectes ravageurs qui ne présente pas les inconvénients ci-dessus, c'est-à-dire une composition qui soit à la fois non toxique pour l'homme, qui présente une efficacité durable dans le temps, et un spectre d'action très large contre une large gamme d'insectes.

Ce besoin pour une nouvelle composition de lutte contre les insectes ravageurs est particulièrement présent dans le domaine de l'arboriculture. Dans ce domaine, des moyens de lutte biologique contre les ravageurs ont été développés comme alternative à l'utilisation de pesticides. Il s'agit de méthodes de lutte qui consistent à introduire dans une culture un ennemi naturel, par exemple un insecte importé d'autres cultures ou provenant d'élevages massifs, pour combattre un ravageur bien identifié.

Aujourd'hui, la lutte biologique à l'aide d'insectes est peu utilisée dans la pratique arboricole pour les raisons suivantes. Il existe tout d'abord de grandes difficultés à mettre en oeuvre la lutte biologique en milieu ouvert. Il est en effet difficile de maîtriser la dispersion et le maintien des insectes dans les cultures. De plus, les conditions de leur développement ne peuvent pas être régulées. Enfin, les techniques de production onéreuses rendent le coût de la protection peu compétitif par rapport à la lutte chimique.

Parallèlement, des moyens de lutte microbiologique faisant appel à des techniques d'application comparables à celles utilisées pour les produits phytosanitaires ont été développés dans le domaine arboricole. Ces moyens de lutte microbiologique contre les ravageurs consistent à répandre sur les arbres, des compositions à base de bactéries. Néanmoins, l'irrégularité de l'efficacité de cette technique est un handicap majeur de cette technique. En effet, le temps d'activation des organismes utilisés ou de leur toxine et les quantités de produits ingérées par le ravageur peuvent varier considérablement en fonction des conditions climatiques.

Ce besoin pour une nouvelle composition de lutte contre les insectes ravageurs est encore plus présent dans le domaine de la culture des palmiers, qui peuvent être la cible d'attaques d'insectes nuisibles tel que le papillon *Paysandisia archon* ou le charançon *Rynchophorus ferrugineus,* insectes contre lesquels peu de moyens de lutte efficace existent aujourd'hui.

En particulier, le papillon *Paysandisia archon* d'origine argentine cause des dégâts notables dans les pays méditerranéens. Tous les types de palmiers peuvent être atteints et plus les palmiers ont de fibres sur leur stipe, plus ils ont de risque d'héberger rapidement cet hôte indésirable.

Dans ce contexte particulier, plusieurs solutions ont été envisagées pour lutter contre les insectes nuisibles infestant les palmiers.

On peut citer en premier lieu l'emploi de phéromones dans le but d'entraîner une confusion sexuelle et de piéger un des partenaires. Ce type de stratégie est cependant inefficace pour lutter contre *Paysandisia archon,* espèce dans laquelle seule la femelle fabrique une phéromone sexuelle, non employable pour un piégeage.

La recherche de prédateurs ou de parasites permettant une lutte biologique contre *paysandisia archon* s'avère également infructueuse.

L'utilisation de compositions insecticides a également été envisagée mais présente les inconvénients cités ci-dessus, et la physiologie du palmier rend très difficile la pénétration et le transport au sein de la plante, de molécules exogènes de type composition insecticides.

De plus, les larves d'insectes sont parfois enfouies profondément sous la surface du stipe des palmiers, rendant l'utilisation de composition insecticides inefficace vis-à-vis de ces larves.

Une solution consistant en un ensachage des couronnes des palmiers par une toile a été envisagée. Cette solution technique risque cependant de créer une sur-infestation des arbres déjà infestés, les insectes se reproduisant sous la toile. De plus cette solution présente un coût très élevé, et est difficilement réalisable pour traiter des végétaux de grande taille.

Il existe donc également besoin de trouver rapidement un moyen de lutte contre les insectes ravageurs du palmier.

Les inventeurs ont donc mis au point une nouvelle composition destinée à la lutte contre les insectes ravageurs, ne présentant pas les inconvénients cités ci-dessus, adaptée au traitement de tous types de plantes et en particulier les arbres, et les palmiers.

### Sommaire de l'invention

Les inventeurs ont découvert qu'il est possible de lutter contre les insectes ravageurs pouvant infester les plantes, en créant une barrière physique projetable, entre l'insecte et la plante.

L'invention a donc pour objet une composition comprenant du latex et au moins un composé épaississant, choisi parmi de l'argile, de la glu, une résine, une cire, une gomme, un mucilage, de l'agar, du sorbitol, de l'alginate, un polymère naturel, un polymère synthétique et leurs mélanges.

Selon un mode de réalisation particulier, le composé épaississant est de la glu, ladite glu comprenant elle-même au moins une huile et au moins une résine.

L'invention a également pour objet un procédé de préparation d'une composition telle que définie ci-dessus, comprenant les étapes successives suivantes, dans lesquelles les pourcentages sont exprimés en poids par rapport au poids total de la composition :
a) le mélange de 20 à 40% de glu avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de glu, à une température de 40 à 90°C,
étant entendu que la glu comprend elle-même, par rapport au poids total de la glu, 40 à 80% en poids d'huile et 20 à 60% en poids de résine.

Enfin, l'invention a encore pour objet l'utilisation d'une composition telle que définie ci-dessus pour former un revêtement étanche vis à vis d'un insecte à la surface d'une plante.

### Description détaillée de l'invention

Les inventeurs ont découvert qu'il est possible de lutter contre les insectes ravageurs pouvant infester les plantes, en créant une barrière physique entre l'insecte et la plante.

Par « barrière physique », on entend au sens de la présente invention un moyen capable de limiter ou de bloquer l'accès d'un insecte, y compris un insecte volant, à une plante, et en ce qui concerne une plante déjà infestée par un insecte ravageur, un moyen capable de créer une entrave au déplacement et au développement de l'insecte.

Les inventeurs ont donc mis au point une composition destinée à la lutte contre les insectes ravageurs, capable de former, après application sur une plante, un revêtement créant une barrière physique durable entre la plante et l'insecte.

De manière générale, cette composition peut comprendre tout composant ou mélange de composants, dont les caractéristiques physiques permettent d'une part une application aisée sur la plante, par exemple par pulvérisation ou épandage et permettent, d'autre part, de créer un revêtement présentant une cohésion suffisante pour former une barrière physique à la surface d'une plante.

A titre d'exemple, cette composition peut comprendre au moins un composé choisi parmi le latex, un élastomère, un polyhydroxyalcaloate, un polyacide lactique, et leurs mélanges.

La composition peut comprendre en outre un adjuvant ou un mélange d'adjuvants permettant un épaississement de la composition, compatible avec le mode d'application de celle-ci, et par exemple une résine, une cire, une gomme, un mucilage, de l'agar, du sorbitol, de la cellulose, de l'amidon, une protéine et leurs mélanges.

Pour permettre une application aisée de la composition sur la plante, ladite composition pourra également comprendre des adjuvants permettant de modifier la texture de la composition, tels que des émulsifiants, des adjuvants permettant de faciliter l'application du produit sur la plante, comme une huile ou encore d'autres additifs tels que des pigments.

La composition mise au point par les inventeurs permet de créer un revêtement formant une barrière physique durable, c'est-à-dire efficace pendant plusieurs mois, et même jusqu'à un an ou plus après application, et ce, quelles que soient les conditions météorologiques rencontrées, y compris lorsque de fortes amplitudes de températures sont rencontrées.

Les inventeurs ont donc mis au point une composition dont les caractéristiques physiques, et en particulier la viscosité, la cohésion est telle que la composition crée une barrière physique durable entre un insecte et une plante, tout en étant facile à appliquer.

Ainsi, selon l'invention, la composition comprend du latex et au moins un composé épaississant, choisi parmi de l'argile, de la glu, une résine, une cire, une gomme, un mucilage, de l'agar, du sorbitol, de l'alginate, un polymère naturel, un polymère synthétique et leurs mélanges.

Cette composition forme un revêtement créant une barrière physique durable dans le temps entre les insectes ravageurs et la zone traitée de la plante, tout au long du cycle de développement d'un insecte ravageur. La composition limite ou bloque notamment, la ponte des insectes sur les plantes, l'émergence des larves et des adultes nymphosés et enfin l'accès aux plantes traitées et en particulier l'accès aux plaies des végétaux. La composition est donc efficace pour lutter de manière préventive et curative contre les infestations par des insectes ravageurs.

Comme cela a été exposé ci-dessus, la composition objet de l'invention agit par une action mécanique sur les insectes qui est complètement distincte de l'action toxique que peuvent avoir certaines compositions insecticides antérieurement connues.

Par « composé épaississant », on entend au sens de la présente invention un composé, qui une fois ajouté au latex, a pour effet d'augmenter la viscosité de celui-ci. L'augmentation de viscosité peut être immédiate, c'est-à-dire avoir lieu au moment du mélange du latex et du composé épaississant ou être progressive, après application de la composition de l'invention sur la plante, au contact de l'air.

La composition selon l'invention, permet de former un revêtement à la surface d'une plante, qui reste efficace plusieurs mois après application.

De préférence, le latex comprend au moins 30% en poids de polyisoprène. A titre d'exemple, le latex est du latex naturel issu de l'hévéa comprenant environ, en poids par rapport au poids total du latex 34% de poly-isoprène. Bien entendu, un latex disponible commercialement, comprenant 60% de polyisoprène ou plus convient également à la réalisation de l'invention.

La composition objet de l'invention peut comprendre, en poids par rapport au poids total de la composition :
- 10 à 90% de latex et
- 10 à 90% de composé épaississant.

De préférence, la composition objet de l'invention peut comprendre, en poids par rapport au poids total de la composition :
- 20 à 60% de latex et
- 40 à 80% de composé épaississant.

Lorsque le composé épaississant est un polymère naturel, celui-ci peut être choisi parmi la cellulose, l'amidon, une protéine, une résine et leurs mélanges.

Le composé épaississant peut également être un polymère synthétique, et par exemple un polyhydroxyalcaloate, un élastomère, un polyacide lactique, et leurs mélanges.

Dans un mode de réalisation préféré de l'invention, le composé épaississant mis en oeuvre dans la composition objet de l'invention, quelle que soit sa nature, est biodégradable, c'est-à-dire qu'il se décompose en formant des résidus non toxiques ou même sans former de résidus, lorsqu'il est en contact avec l'environnement.

Le mélange du latex avec le composé épaississant permet de former une composition dont la viscosité évolue au cours du temps selon trois phase, dont la durée dépend en grande partie des conditions climatiques rencontrées.

Au cours d'une première phase, la viscosité de la composition est relativement faible, c'est à dire compatible avec une application sur une plante, par exemple par épandage. Au cours d'une deuxième phase, après application sur la plante, la viscosité de la composition augmente, ce qui permet de former un revêtement qui va durcir. Enfin, au cours d'une troisième phase, la viscosité de la composition diminue pour former un revêtement ayant la consistance d'un gel épais.

Sans vouloir être lié par une quelconque théorie, les inventeurs pensent que la composition objet de l'invention est la plus efficace au cours de la troisième phase, pouvant durer plusieurs mois.

De préférence, le composé épaississant comprend de l'argile. A titre d'exemple, une composition préférée comprend, en poids par rapport au poids total de la composition 50% en poids d'argile, et 50% en poids de latex.

Par « argile » on entend au sens de la présente invention une composition comprenant une roche sédimentaire essentiellement à base de minéraux tels que la kaolinite, la montmorillonite, et l'illite.

L'argile utilisée à titre de composé épaississant se présente de préférence sous la forme d'une composition comprenant 10 à 20% p/v d'argile dans de l'eau.

L'utilisation d'argile à titre de composé épaississant au sein de la composition objet de l'invention est particulièrement avantageuse. En effet, une composition comprenant de l'argile est tout d'abord intéressante d'un point de vue économique, compte tenu du faible coût de l'argile. Ensuite, une composition comprenant de l'argile permet de créer un revêtement formant non seulement une barrière physique vis-à-vis des arthropodes, mais également un revêtement formant une barrière contre le rayonnement ultra-violet, permettant de limiter la dégradation du latex au contact de l'air ambiant.

Dans un mode de réalisation particulier de l'invention, le composé épaississant comprend de la glu, ladite glu comprenant elle-même au moins une huile et au moins une résine.

L'utilisation de glu à titre de composé épaississant au sein de la composition objet de l'invention est particulièrement avantageuse. En effet, une composition comprenant de la glu permet de créer un revêtement formant une barrière physique collante vis-à-vis des arthropodes, qui a pour effet de piéger les insectes venant au contact du revêtement. Ainsi, les arthropodes adultes, venant par exemple pondre des oeufs sur la plante sont piégés par engluement, lorsqu'ils entrent en contact avec le revêtement objet de l'invention.

L'homme du métier pourra aisément choisir entre l'utilisation d'argile, de glu ou de leur mélange à titre de composé épaississant en fonction du type d'infestation, et de la saison pendant laquelle la composition doit être appliquée.

Sans vouloir être liés à une quelconque théorie, les inventeurs pensent que des compositions comprenant du latex ou de l'argile, présentent des modes d'action différents.

En effet, les inventeurs pensent qu'une composition à base de latex et d'argile, permet de créer un revêtement présentant une forte cohésion, c'est-à-dire capable de limiter fortement l'émergence d'adultes à partir de larves présentes dans ou sur la plante. De même, une composition à base d'argile limite ou gêne la ponte des femelles sur la plante, mais ne piège pas les femelles elles-méme venant pondre.

A l'inverse une composition à base de latex et de glu piège les femelles venant pondre, du fait de l'aspect collant de la composition à base de glu, mais est moins efficace pour bloquer l'émergence d'adultes à partir de larves présentes dans ou sur la plante.

En conséquence, l'homme du métier pourra aisément choisir le type de composition à utiliser en fonction de la saison, du type d'insecte à traiter, et du stade de développement (adulte, larve, etc.) dans lequel se présentent la majorité des insectes au moment du traitement.

L'huile d'origine végétale utilisée dans la glu est de préférence choisie parmi l'huile de soja, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de lin, l'huile de maïs, l'huile de noix, l'huile d'amande, l'huile de palme, l'huile de ricin, l'huile de sésame, et leurs mélanges.

De préférence, la résine d'origine végétale est la colophane.

Lorsque de la glu est utilisée dans la composition objet de l'invention ladite glu peut comprendre, en poids par rapport au poids total de la glu :
- 40 à 80 d'huile et
- 20 à 60% en poids de résine.

A titre d'exemple de glu on peut citer une glu arboricole comprenant en poids par rapport au poids total de la glu :
- 64% d'huile de ricin
- 32% de résines.

La glu utilisée peut comprendre en outre un composé choisi parmi, une gomme, une cire, un mucilage et leurs mélanges. A titre d'exemple de glu pouvant également être utilisée pour réaliser une composition conforme à l'invention, on peut citer une glu comprenant, en poids par rapport au poids total de la glu :
- 40% d'huile de résine,
- 35% de résine,
- 20% d'huile de ricin, et
- 5% de cire d'abeille.

Ainsi, de préférence, une composition conforme à l'invention comprend, en poids par rapport au poids total de la composition :
- 20 à 60% de latex, et
- 40 à 80% de glu.

L'homme du métier pourra facilement adapter la concentration de latex et de glu au sein de la gamme définie ci-dessus en fonction des objectifs visés. En effet, les inventeurs ont observé que plus la concentration en latex est forte, plus le revêtement obtenu à partir de la composition sera durable et résistant. Au contraire, plus la concentration en glu sera forte, plus la composition sera collante.

A titre d'exemple, une composition conforme à l'invention peut comprendre 80% de glu et 20% de latex. Une telle composition permet de former un revêtement très collant et fibreux. Une composition comprenant 60% de glu et 40% de latex permet de former un revêtement peu collant au moment de l'application, qui devient de plus en plus collant au cours du temps, résistant bien à des températures élevées. Une composition comprenant 40% de glu et 60% de latex permet de former un revêtement peu ou pas collant au moment de l'application, efficace pour une longue période, pouvant atteindre 3 mois ou plus.

A titre d'exemple, la composition selon l'invention peut comprendre en poids par rapport au poids total de la composition :
- 15% à 30% de résine,
- 25 à 50% d'huile, et
- 20 à 60% de latex.

Sans vouloir être lié par une quelconque théorie, les inventeurs pensent que le latex permet de former un réseau permettant de retenir aisément un ou plusieurs adjuvants qui peuvent être ajoutés à la composition objet de l'invention. En conséquence, pour permettre une application aisée de la composition sur la plante, ladite composition peut comprendre des adjuvants permettant de modifier la texture de la composition, tels que des émulsifiants, des adjuvants permettant de faciliter l'application du produit sur la plante, comme une huile, et par exemple une huile végétale telle que définie ci-dessus ou encore d'autres additifs tels que des pigments.

En outre, la composition objet de l'invention peut comprendre un répulsif naturel destiné à éloigner les arthropodes et par exemple une huile essentielle.

Comme cela a été rappelé ci-dessus, la composition de l'invention agit par une action mécanique sur les insectes, complètement distincte de l'action toxique que peuvent avoir certaines compositions insecticides antérieurement connues.

Du fait de cette action essentiellement mécanique, la composition objet de l'invention possède un très large spectre d'action et est efficace pour lutter contre l'infestation des plantes par tous types d'arthropodes, y compris les insectes, et les insectes volants tels que les papillons.

A titre d'exemples non limitatifs d'insectes et d'arthropodes contre lesquels la composition objet de l'invention permet de lutter, on peut citer par exemple les insectes et arthropodes appartenant à une famille choisie parmi les familles suivantes : Homoptera, Heteroptera, Thysanoptera, Orthoptera, Anoplura, Siphonaptera, Mallophaga, Thysanura, Isoptera, Psocoptera, Hymenoptera, Acarina, Diptera, Lepidoptera, Coleoptera and Dictyoptera.

Les plantes pouvant être traitées par la composition objet de l'invention sont de préférence des arbres ou des plantes arborifères, et par exemple des arbres utilisés dans le domaine de l'arboriculture, de la sylviculture ou encore des arbres d'ornement.

La composition objet de l'invention peut par exemple être utile pour lutter contre les larves de zeuzères des arbres fruitiers, des scolytes des ormes, et plus généralement contre les larves de coléoptères des arbres ligneux.

La composition objet de l'invention peut être utilisée dans une large gamme de température, la rendant ainsi très efficace pour lutter non seulement contre les insectes ravageurs des arbres cultivés dans des zones tempérées, mais aussi contre les insectes ravageurs des arbres cultivés dans des zones dans lesquelles de fortes amplitudes de températures sont rencontrées.

A titre d'exemple d'arbres cultivés dans des zones tempérées pouvant être traités, on peut citer les arbres appartenant aux genres Pyrus, Malus, Prunus, Sorbus, Ulmus, Quercus, Tilia, Betula, Fagus, Castanea, Platanus, Aesculus, Juglans, Zizyphus, Diospyros, Salix, Populus, Cercis, Celtis, Picea, Pinus, Eucalyptus, et Acer.

A titre d'exemple d'arbres cultivés dans des zones dans lesquelles de fortes températures sont rencontrées, on peut citer le goyavier (Psidium guayava L.), le manguier greffé (Mangifera indica L.) le papayer solo (Carica papaya L.), le papayer ordinaire (Carica papaya L.), le sapotillier (Achras sapota L.) le citronnier (Citrus limon L. Burm), l'oranger (Citrus sinensis L. Osb.), le badamier (Terminalia macrophylla), le bananier (Musa paradisiaca L.), l'anacardier (Anacardium occidentale L.) le manguier ordinaire (Mangifera *indica L.)* le grenadier *(Punica granatum L.)* le fruit de la passion *(Passiflora cerulea L.)* le corossolier *(Annona muricata L.)* la pomme cannelle *(Annona escamosa L.)* le mandarinier *(Citrus reticula Blanca)* le pomélo *(Citrus paradisi Macf.)* le nëw *(Parinari macrophylla)* ou encore le cerisier *(Aphania senegalensis, Malpighia sp).*

De plus, les caractéristiques notamment physiques de la composition la rendent particulièrement adaptée à un épandage sur tout type de stipes de palmiers fibreux ou lisses.

A titre d'exemple de palmiers pouvant être traités, on peut citer les genres appartenant à la famille Arecaceae, et en particulier Acanthophoenix, Acoelorrhaphe, Acrocomia, Actinokentia, Actinorhytis, Aiphanes, Allagoptera, Alloschmidia, Alsmithia, Ammandra, Antongilia, Aphandra, Archontophoenix, Areca, Arenga, Asterogyne, Astrocaryum, Attalea, Bactris, Balaka, Barcella, Basselinia, Beccariophoenix, Bentinckia, Bismarckia, Borassodendron, Borassus, Brahea, Brassiophoenix, Brongniartikentia, Burretiokentia, Butia, Calamus, Calospatha, Calyptrocalyx, Calyptrogyne, Calyptronoma, Campecarpus, Carpentaria, Carpoxylon, Caryota, Catoblastus, Ceratolobus, Ceroxylon, Chamaedorea, Chamaerops, Chambeyronia, Chelyocarpus, Chrysalidocarpus, Chuniophoenix, Clinosperma, Clinostigma, Coccothrinax, Cocos, Colpothrinax, Copernicia, Corypha, Cryosophila, Cyphokentia, Cyphophoenix, Cyphosperma, Cyrtostachys, Daemonorops, Deckenia, Desmoncus, Dictyocaryum, Dictyosperma, Drymophloeus, Dypsis, Elaeis, Eleiodoxa, Eremospatha, Eugeissona, Euterpe, Gastrococos, Gaussia, Geonoma, Goniocladus, Gronophyllum, Guihaia, Gulubia, Halmoorea, Hedyscepe, Heterospathe, Howeia, Hydriastele, Hyophorbe, Hyospathe, Hyphaene, Iguanura, Iriartea, Iriartella, Itaya, Jessenia, Johannesteijsmannia, Juania, Jubaea, Jubaeopsis, Kentiopsis, Kerriodoxa, Korthalsia, Laccospadix, Laccosperma, Latania, Lavoixia, Lemurophoenix, Leopoldinia, Lepidocaryum, Lepidorrhachis, Licuala, Linospadix, Livistona, Lodoicea, Louvelia, Loxococcus, Lytocaryum, Mackeea, Manicaria, Marojejya, Masoala, Mauritia, Mauritiella, Maxburretia, Maximiliana, Medemia, Metroxylon, Moratia, Myrialepis, Nannorrhops, Nenga, Neodypsis, Neonicholsonia, Neophloga, Neoveitchia, Nephrosperma, Normanbya, Nypa, Oenocarpus, Oncocalamus, Oncosperma, Orania, Oraniopsis, Orbigyna, Palandra, Parajubaea, Pelagodoxa, Phloga, Phoenicophorium, Phoenix, Pholidocarpus, Pholidostachys, Physokentia, Phytelephas, Pigafetta, Pinanga, Plectocomia, Plectocomiopsis, Podococcus, Pogonotium, Polyandrococos, Prestoea, Pritchardia, Pritchardiopsis, Pseudophoenix, Ptychococcus, Ptychosperma, Raphia, Ravenea, Reinhardtia, Retispatha, Rhapidophyllum, Rhapis, Rhopaloblaste, Rhopalostylis, Roscheria, Roystonea, Sabal, Salacca, Satakentia, Scheelea, Schippia, Sclerosperma, Serenoa, Siphokentia, Socratea, Sommieria, Syagrus, Synechanthus, Tectiphiala, Thrinax, Trachycarpus, Trithrinax, Veillonia, Veitchia, Verschaffeltia, Voanioala, Vonitra, Wallichia, Washingtonia, Welfia, Wendlandiella, Wettenia, Wodyetia, Ynesa, Zombia.

L'infestation des palmiers par le papillon *Paysandisia archon* est problématique. La composition objet de l'invention après épandage sur un palmier, forme un revêtement permettant de lutter efficacement contre ce ravageur.

La composition objet de l'invention permet également de lutter efficacement contre l'infestation des palmiers par les insectes appartenant aux espèces suivantes *Rynchophorus ferrugineus, Rynchophorus vulneratus, Rynchophorus lobatus, Rynchophorus distinctus, et Rynchophorus bilineatus.*

La composition objet de l'invention peut être épandue sur une plante, en particulier un arbre par tout moyen connu de l'homme du métier, et par exemple en utilisant une projeteuse de produit pâteux. De manière générale la composition objet de l'invention doit être épandue à la surface d'une plante de sorte à former un revêtement à la surface d'une plante, dans une zone infestée ou susceptible d'être infestée par un insecte ravageur. Il peut s'agir par exemple de la partie supérieure du tronc d'un arbre, ou de la partie supérieure du stipe ou du bourgeon apical en ce qui concerne les palmiers.

La composition objet de l'invention peut également être pulvérisée sur une plante, sous forme de fines gouttelettes sur l'ensemble de la plante, ou sur une partie de celle-ci pour empêcher la propagation du ravageur. Ce mode d'épandage par pulvérisation est particulièrement préféré lorsque la composition objet de l'invention est destinée à être appliquée sur des plantes non ligneuses.

L'invention a donc également pour objet l'utilisation d'une composition telle que définie ci-dessus pour former un revêtement étanche vis-à-vis d'un insecte à la surface d'une plante, et en particulier pour former un réseau discontinu de gouttelettes collantes gênant ou piégeant les insectes et autres arthropodes ravageurs des plantes.

Au moment de l'application, l'homme du métier pourra prévoir d'abaisser temporairement la viscosité de la composition objet de l'invention, de manière à faciliter l'épandage de celle-ci à la surface de la plante. Cet abaissement temporaire de la viscosité peut être réalisé par exemple en ajoutant un solvant.

L'invention a également pour objet un procédé de préparation d'une composition telle que définie ci-dessus, comprenant par rapport au poids total de la composition :
- 10 à 90% en poids de latex, et
- 10 à 90% en poids de glu.

Ledit procédé comprend les étapes successives suivantes, dans lesquelles les pourcentages sont exprimés en poids par rapport au poids total de la composition :
a) le mélange de 20 à 40% de glu avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de glu, à une température de 40 à 90°C,
étant entendu que la glu comprend elle-même, par rapport au poids total de la glu, 40 à 80% en poids d'huile et 20 à 60% en poids de résine.

De préférence, à l'étape f), le mélange est arrêté au moment de l'apparition de longs filaments, lorsque la composition durcit.

L'invention concerne enfin un procédé de préparation d'une composition comprenant du latex et de l'argile, ledit procédé comprenant au moins une étape au cours de laquelle on mélange une composition comprenant 16% p/v d'argile dans de l'eau avec du latex, de sorte à obtenir une composition comprenant 50% en poids de latex et 50% en poids de ladite composition comprenant 16% p/v d'argile dans de l'eau.

L'invention est en outre illustrée par les exemples non limitatifs suivants. Dans les exemples 1 à 4 suivants, du latex naturel, comprenant 60% en poids de polyisoprène, par rapport au poids total du latex a été utilisé. Dans les exemples 1 et 2 une glu dont la composition est donnée ci-après a été utilisée :
Glu comprenant, en poids par rapport au poids total de la glu :
   - 40% d'huile de résine,
   - 35% de colophane,
   - 20% d'huile de ricin, et
   - 5% de cire d'abeille.

### Exemple 1 : compositions conformes à l'invention, comprenant de la glu

### Composition 1

les pourcentages sont des pourcentages en poids par rapport au poids total de la composition
- 20% de latex, et
- 80% de glu.

### Composition 2

les pourcentages sont des pourcentages en poids par rapport au poids total de la composition
- 40% de latex, et
- 60% de glu.

### Composition 3

les pourcentages sont des pourcentages en poids par rapport au poids total de la composition
- 50% de latex, et
- 50% de glu.

### Composition 4

les pourcentages sont des pourcentages en poids par rapport au poids total de la composition
- 60% de latex, et
- 40% de glu.

La composition 1, comprenant une forte concentration de glu permet de former un revêtement très collant et fibreux. La composition 2, comprenant plus de composé épaississant, sous forme de latex, que la composition 1, permet de former un revêtement moins collant, résistant bien à des températures élevées. Un résultat similaire peut être obtenu avec la composition 3. Enfin, la composition 4 permet de former un revêtement peu ou pas collant au moment de l'application, efficace pour une longue période, pouvant atteindre 3 mois ou plus, qui deviendra collant au cours du temps, au contact de l'air ambiant.

### Exemple 2 : Procédé de fabrication d'une composition conforme à l'invention, comprenant de la glu

Une composition conforme à l'invention a été préparée en suivant les étapes successives suivantes :
a) 5 litres de glu sont mélangés à 2,5 litres d'huile végétale,
b) la composition obtenue en a) est chauffée à une température de 40 à 90°C,
c) séparément, 3 litres de latex naturel concentré à 60% sont mélangés à 2 litres d'eau, (1)
d) la composition obtenue à l'étape c) est ajoutée à la composition obtenue à l'étape b),
e) la composition obtenue à l'étape d) est mélangée à 5 litres de latex naturel concentré à 60%, et
f) 2,5 litres de glu chauffée sont incorporées à la composition obtenue à l'étape e).(2)

(1) Le latex est mélangé à de l'eau lors de la première introduction de sorte à éviter un épaississement rapide de la composition.
(2) L'incorporation de glu chauffée à l'étape f) permet d'affiner la consistance de la composition, jusqu'à l'obtention d'une pâte liquide mais épaisse.

### Exemple 3 : composition conformes à l'invention, comprenant de l'argile

### Composition 5

Sauf indication contraire, les pourcentages sont des pourcentages en poids par rapport au poids total de la composition :
- 50% d'une composition comprenant 16% p/v d'argile diluée dans l'eau, et
- 50% de latex naturel concentré à 60%.

### Exemple 4 : Procédé de fabrication d'une composition conforme à l'invention, comprenant de l'argile

Une composition conforme à l'invention a été préparée en suivant les étapes successives suivantes :
a) une solution mère d'argile comprenant 33% p/v d'argile a été diluée dans de l'eau pour obtenir une composition comprenant 16% p/v d'argile dans l'eau.
b) la composition obtenue en a) est mélangée avec du latex, de sorte à obtenir une composition comprenant 50% en poids de latex et 50% en poids de la composition obtenue en a).

## Revendications

1. Composition comprenant du latex et au moins un composé épaississant, choisi parmi de l'argile, de la glu, une résine, une cire, une gomme, un mucilage, de l'agar, du sorbitol, de l'alginate, un polymère naturel, un polymère synthétique et leurs mélanges.

2. Composition selon la revendication 1, **caractérisée en ce que** le latex comprend au moins 30% en poids de polyisoprène.

3. Composition selon la revendication 1 ou 2, **caractérisée en ce qu'**elle comprend, en poids par rapport au poids total de la composition :
- 10 à 90% de latex et
- 10 à 90% de composé épaississant.

4. Composition selon l'une quelconque des revendications 1 à 3, **caractérisée en ce que** le composé épaississant comprend de l'argile.

5. Composition selon l'une quelconque des revendications 1 à 4, **caractérisée en ce qu'**elle comprend, en poids par rapport au poids total de la composition :
- 50% de latex et
- 50% d'argile.

6. Composition selon l'une quelconque des revendications 1 à 3, **caractérisée en ce que** le composé épaississant comprend de la glu, ladite glu comprenant elle-même au moins une huile et au moins une résine.

7. Composition selon la revendication 6, **caractérisée en ce que** l'huile est choisie parmi l'huile de soja, l'huile de tournesol, l'huile de colza, l'huile de pépins de raisin, l'huile d'arachide, l'huile d'olive, l'huile de canola, l'huile de carthame, l'huile de coprah, l'huile de germe de blé, l'huile de lin, l'huile de maïs, l'huile de noix, l'huile d'amande, l'huile de palme, l'huile de ricin, l'huile de sésame, et leurs mélanges.

8. Composition selon la revendication 6 ou 7, **caractérisée en ce que** la composition comprend, en poids par rapport au poids total de la composition :
- 15% à 30% de résine,
- 25 à 50% d'huile, et
- 20 à 60% de latex.

9. Procédé de préparation d'une composition telle que définie dans la revendication 8, comprenant les étapes successives suivantes, dans lesquelles les pourcentages sont exprimés en poids par rapport au poids total de la composition :
a) le mélange de 20 à 40% de glu avec 10 à 20% d'huile,
b) chauffage de la composition obtenue en a) à une température de 40 à 90°C,
c) le mélange de 10 à 30% de latex avec 5 à 15% d'eau,
d) l'ajout de la composition obtenue à l'étape c) à la composition obtenue à l'étape b),
e) le mélange de la composition obtenue à l'étape d) avec 10 à 30% de latex, et
f) le mélange de la composition obtenue à l'étape e) avec 20 à 40% de glu, à une température de 40 à 90°C,
étant entendu que la glu comprend elle-même, par rapport au poids total de la glu, 40 à 80% en poids d'huile et 20 à 60% en poids de résine.

10. Utilisation d'une composition selon l'une quelconque des revendications 1 à 9 pour former un revêtement étanche vis à vis d'un insecte à la surface d'une plante.
